# EUROPEAN PATENT APPLICATION

(11) **EP 2 808 931 A1**
(43) Date of publication of application: **03.12.2014**
(21) Application number: 13741237.5
(22) Date of filing: 17.01.2013
(51) Int. Cl.: H01M 8/04, H01M 8/00, H01M 8/12

(54) **FUEL CELL SYSTEM**

(30) Priority: 26.01.2012 JP 2012014213
(71) Applicant: Konica Minolta, Inc., Tokyo 100-7015 (JP)
(72) Inventor: UEYAMA Masayuki, Tokyo 100-7015 (JP)
(74) Representative: Hoffmann Eitle
(86) International application number: PCT/JP2013/050708
(87) International publication number: WO 2013/111655

(57) **Abstract**

A fuel cell system is provided with a fuel generation part for generating a fuel gas and a fuel cell part for generating power using the fuel gas. The fuel cell system forces circulation of gas including the fuel gas between the fuel cell part and the fuel generation part. The fuel cell system is provided with a gas circulation volume setting part for setting a circulation volume of gas circulating between the fuel cell part and the fuel generation part so that the circulation volume of gas circulating between the fuel cell part and the fuel generation part is brought to a circulation volume per unit time related to a moment in time, which is determined against an estimated value of power demand per unit time related to the moment in time.

## Description

### Technical Field

The present invention relates to a fuel cell system provided with a fuel cell part and a fuel generation part.

### Background Art

A fuel cell cogeneration system generates power by a fuel cell with municipal gas, or the like, as the fuel. The generated electricity is utilized, and heat generated during power generation by the fuel cell also is utilized for hot water supply, heating, or the like, so that energy efficiency is increased.

### List of Citations

### Patent Literature

Patent Document 1: Japanese Patent Application Publication No. 2006-73316
Patent Document 2: Japanese Patent Application Publication No. 2006-140103
Patent Document 3: Japanese Patent Application Publication No. 2006-244882

### Summary of Invention

### Technical Problem

However, in a fuel cell cogeneration system, unless a volume of fuel gas matching the amount of power generated by the fuel cell is supplied, a large volume of fuel gas not contributing to power generation may be discharged from the system or the fuel gas may become insufficient. Accordingly, in a fuel cell cogeneration system, the amount of power generated by the fuel cell or a physical quantity correlated with the amount of power generated by the fuel cell must be monitored, and the supply volume of fuel gas must be finely controlled in accordance with the monitoring result. A fuel cell cogeneration system usually operates so that a fuel gas utilization rate becomes about 70 to 80%.

The fuel cell systems proposed in patent documents 1 to 3 all are applicable to fuel cell cogeneration systems and can control the supply volume of fuel gas, but the supply volume of fuel gas must be finely controlled in order to maintain a fuel gas utilization rate at a high level (for example, about 70 to 80%) in a manner so that energy efficiency does not decline.

In consideration of the above circumstances, an object of the present invention is to provide a fuel cell system in which insufficiency or waste of fuel gas can be prevented without requiring fine control of the supply volume of fuel gas.

### Solution to Problem

A fuel cell system according to one aspect of the present invention for achieving the abovementioned object is a fuel cell system provided with a fuel generation part for generating a fuel gas, and a fuel cell part for generating power using the fuel gas, the fuel cell system forcibly circulating gas including the fuel gas between the fuel cell part and the fuel generation part. The fuel cell system is configured being further provided with a gas circulation volume setting part for setting a circulation volume of gas circulating between the fuel cell part and the fuel generation part so that the circulation volume of gas circulating between the fuel cell part and the fuel generation part is brought to a circulation volume determined against an estimated value of power demand per unit time related to a moment in time. The circulation volume can be a circulation volume per unit time related to the moment in time.

The circulation volume of gas set in the gas circulation volume setting part also can be set so as to be higher than a volume required for the fuel cell system to generate power at the estimated value of power demand per unit time related to the moment in time.

The circulation volume of gas set in the gas circulation volume setting part furthermore can be set so as to be higher than the estimated value of volume required per unit time related to the moment in time, which is a volume required for the fuel cell system to generate power at the estimated value of power demand per unit time related to the moment in time.

### Advantageous Effects of the Invention

According to the above fuel cell system, insufficiency of fuel gas can be prevented without requiring fine control of the supply volume of fuel gas, by setting the unit time to a comparatively long time. Also according to the above fuel cell system, waste of fuel gas can be prevented because fuel gas not used in the fuel cell part is reutilized being resupplied to the fuel cell part by circulation.

### Brief Description of Drawings

[Fig. 1] is a type drawing illustrating the general configuration of a fuel cell system according to one embodiment of the present invention.
[Fig. 2] is a graph illustrating an example of the transition of average power usage in a home.
[Fig. 3] is a graph illustrating an example of setting of gas circulation volume when charging with night power and generating power during the day.
[Fig. 4] is a graph illustrating an example of setting of gas circulation volume when charging using power generated by a solar power generation system.
[Fig. 5] is a type drawing illustrating the general configuration of a fuel cell system according to another embodiment of the present invention.

### Description of Embodiments

An embodiment of the present invention is described below while referring to the drawings. The present invention is not limited to the embodiment to be described.

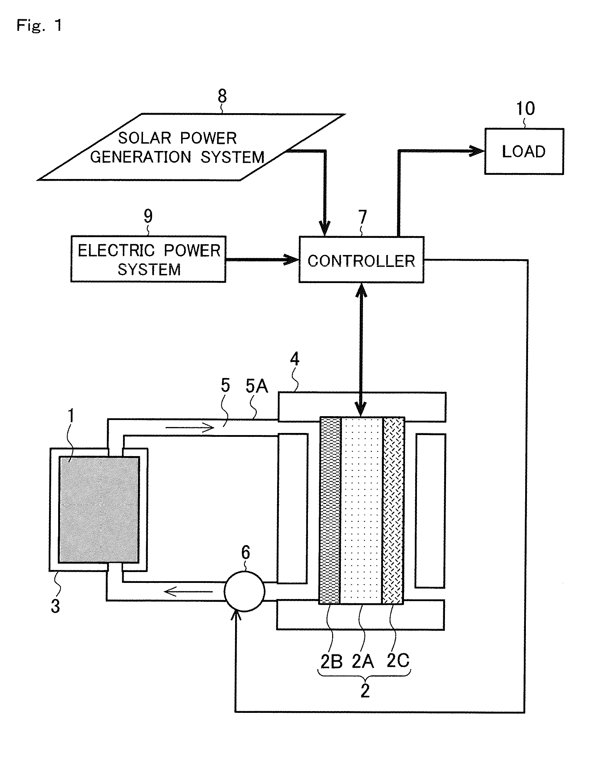

Fig. 1 illustrates the general configuration of a fuel cell system according to one embodiment of the present invention. The fuel cell system according to one embodiment of the present invention illustrated in Fig. 1 is provided with: a fuel gas generation member 1 for generating a fuel gas; a fuel cell part 2 for generating power by a reaction between an oxidizer including oxygen and the fuel gas supplied from the fuel gas generation member 1; a container 3 for housing the fuel gas generation member 1; a container 4 for housing the fuel cell part 4; a gas flow channel configuration member 5A for configuring a gas flow channel 5 connecting the fuel gas generation member 1 and the fuel cell part 2; a circulator (for example, blower, pump, or the like) 6 provided on the gas flow channel 5 for forcing circulation of the gas including the fuel gas between the fuel cell part 2 and the fuel gas generation member 1; and a controller 7 for setting a volume of gas circulating between the fuel cell part 2 and the fuel gas generation member 1 and controlling the circulator 6 in accordance with the setting. A heater, or the like, for regulating temperature may be provided as needed on the periphery of the fuel gas generation member 1 or on the periphery of the fuel cell part 2.

The controller 7, in addition to controlling the circulator 6, switches each connection state between the fuel cell part 2 and a solar power generation system 8, an electric power system 9, and a load 10. Accordingly, when the fuel cell system according to one embodiment of the present invention is a secondary cell-type fuel cell system capable of regenerating the fuel gas generation member 1 when the fuel cell part 2 is operated as an electrolysis device, for example, the fuel cell system charges night power supplied from the electric power system 9 or output power of the solar power generation system 8, and generates power at other times to supply power to the load 10, being various kinds of home electrical appliances.

The fuel gas generation member 1 can be, for example, a material using metal as a matrix and having a metal or metal oxide added to the surface thereof to generate fuel by a chemical reaction. Examples of metals of the matrix include Ni, Fe, Pd, V, Mg, and alloys having these as base materials, and Fe, in particular, is preferred, being inexpensive and easy to process. Examples of added metals include Al, Rd, Pd, Cr, Ni, Cu, Co, V, and Mo, and examples of added metal oxides include SiO₂ and TiO₂. However, the metal serving as the matrix and the added metal are not the same material. In the present embodiment, a hydrogen generation member composed mainly of Fe is used as the fuel gas generation member 1.

Also in the fuel gas generation member 1, a surface area per unit volume is desirably larger for the purpose of increasing reactivity thereof. An example of a preferred method for increasing the surface area per unit volume of the fuel gas generation member 1 is to finely pulverize the main component of the fuel gas generation member 1 and to mold the finely pulverized material thereof. An example of a method for finely pulverizing is to crush the particles by pulverization using a ball mill, or the like. The surface area of the fine particles may furthermore be increased further by generating cracks in the fine particles by a mechanical method, or the like, and the surface area of the fine particles may be increased further by roughening the surface of the fine particles by acid treatment, alkali treatment, blast processing, or the like. The fuel gas generation member 1 may also be a material in which the fine particles are hardened leaving openings to the extent that gas passes through, and may also be formed into pellet-form grains of which a large number are embedded in spaces.

The fuel cell part 2, as illustrated in Fig. 1, is a MEA (Membrane Electrode Assembly) structure in which a fuel electrode 2B and an air electrode 2C being an oxidizer electrode are joined on both sides of an electrolytic membrane 2A. In Fig. 1, a structure in which only one MEA is provided is illustrated, but a plurality of MEAs may be provided, and the plurality of MEAs may be further formed in a laminate structure.

The material of the electrolytic membrane 2A is an electrolyte that passes oxygen ions or hydroxide ions. For example, a solid oxide electrolyte using yttria-stabilized zirconia (YSZ) is used, and is arranged to generate water on the side of the fuel electrode 2B during power generation. In this case, hydrogen can be generated from the fuel gas generation member 1 by a chemical reaction using water generated on the side of the fuel electrode 2B during power generation.

The electrolytic membrane 2A can be formed using electrochemical vapor deposition (CVD-EVD: Chemical Vapor Deposition-Electrochemical Vapor Deposition).

The fuel electrode 2B and the air electrode 2C each can be configured, for example, with a catalyst layer contacting with the electrolytic membrane 2A and a diffusion electrode layered on the catalyst layer. Examples of catalyst layers include platinum black or materials having platinum supported on carbon black. Examples of materials of the diffusion electrode of the fuel electrode 2B include carbon paper, Ni-Fe-based cermets, and Ni-YSZ-based cermets. Examples of materials of the diffusion electrode of the air electrode include carbon paper, La-Mn-O-based compounds, or La-Co-Ce-based compounds. The fuel electrode 2B and the air electrode 2C each can be formed, for example, using a vapor deposition method.

When a solid oxide fuel cell is used as the fuel cell part 2, the reaction of formula (1) below occurs in the fuel cell part 2 during power generation. The fuel cell part 2 consumes hydrogen on the fuel electrode 2B, consumes oxygen on the air electrode 2C, and generates power. Water vapor generated on the fuel electrode 2B side is supplied to the fuel gas generation member 1.

H₂ + (1/2)O₂ → H₂O (1)

The reaction of formula (2) below also occurs in the fuel gas generation member 1 during power generation. The fuel gas generation member 1 consumes water vapor supplied from the fuel cell part 2, generates hydrogen, and supplies the generated hydrogen to the fuel cell part 2.

3Fe + 4H₂O → Fe₃O₄ + 4H₂ (2)

Also the reverse reactions of the above formulas (1) and (2) respectively occur during charging. Therefore, during charging, the fuel cell part 2 electrolyzes the water vapor, generates hydrogen on the fuel electrode 2B, and generates oxygen on the air electrode 2C. Also during charging, the fuel gas generation member 1 consumes hydrogen supplied from the fuel electrode 2B of the fuel cell part 2, reduces iron oxide to generate water vapor, and supplies the generated water vapor to the fuel electrode 2B of the fuel cell part 2.

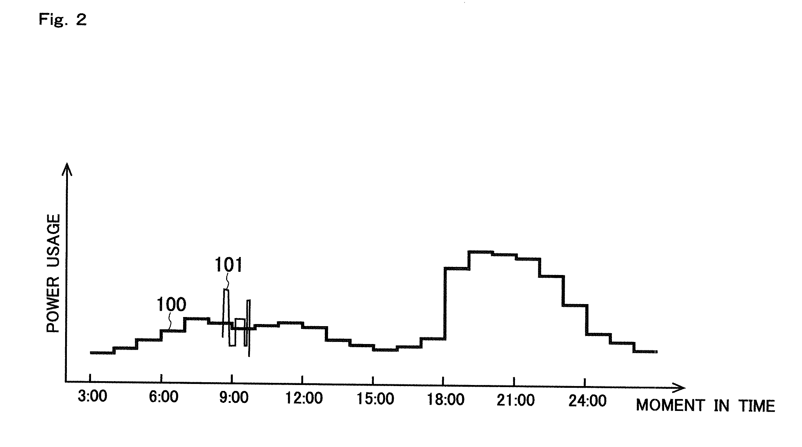

An example of the transition of average power usage in a home is illustrated here in Fig. 2. Although the shape of the graph of average power usage varies by family structure and lifestyle, a pattern determined to a certain extent by season, day of week, and time period is presented. The graph 100 of average power usage illustrated in Fig. 2 is obtained, for example, by plotting an average of power usage per hour. The graph 101 of actual power usage may fluctuate greatly in a short period of the order of several minutes, as partially illustrated as an example in Fig. 2, accompanying switching of various home appliances on and off, that is, accompanying fluctuation of the load 10.

The controller 7 determines a power per unit time related to a moment in time, that is, an estimated value of power demand per unit time related to the moment in time, to be covered by power generated by the fuel cell part 2, on the basis of the average power usage in the home. With regard to a gas circulation volume required during power generation, a hydrogen consumption per unit time is determined from a discharge current corresponding to an estimated value of power demand per unit time related to the moment in time, and a volume of gas to be circulated per unit time (estimated value of volume required) is obtained from the hydrogen consumption per unit time and a ratio of hydrogen in the gas circulating. The same applies also with regard to a gas circulation volume required during charging; a volume of water vapor per unit time required for electrolysis is determined from a charging current, and a volume of gas to be circulated per unit time is obtained from the volume of water vapor per unit time required for electrolysis and a ratio of water vapor in the gas circulating. The ratio of water vapor and hydrogen in the gas circulating between the fuel gas generation member 1 and the fuel cell part 2 is determined in an equilibrium condition according to a temperature of iron if there is a quantity of iron sufficient to produce a reaction at a sufficient rate.

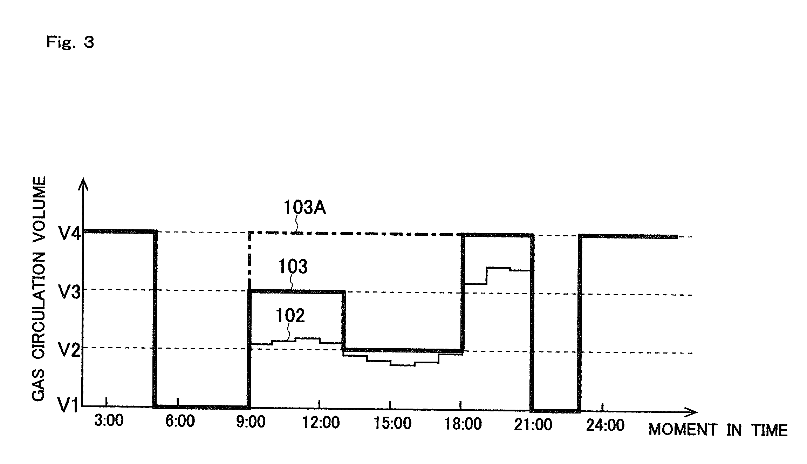

Fig. 3 is a graph illustrating an example of setting of gas circulation volume when charging with night power and generating power during the day. In the example illustrated in Fig. 3, power is generated from 9:00 to 21:00 by the fuel cell system according to one embodiment of the present invention. During the other time periods, for example, power is supplied to the load 10 using power supplied from the electric power system 9. Also in the example illustrated in Fig. 3, the fuel cell system according to one embodiment of the present invention charges from 23:00 to 5:00.

The controller 7 sets the gas circulation volume (graph 103 in Fig. 3) so as to be higher than the estimated value of volume required (graph 102 in Fig. 3) during power generation (9:00 to 21:00) by the fuel cell system according to one embodiment of the present invention. Here, for simplification of control, as illustrated in Fig. 3, the controller 7 sets four stages of discrete circulation volume (V1 to V4) with a value corresponding to maximum power of the fuel cell system according to one embodiment of the present invention as a maximum value and 0 as a minimum value, and sets a smallest circulation volume higher than the estimated value of volume required in relation to a moment in time.

Insufficiency of fuel gas can be prevented without requiring fine control of the supply volume of fuel gas, by setting the unit time to a comparatively long time (for example, one hour). Waste of fuel gas also can be prevented because the fuel cell system according to one embodiment of the present invention is configured so that gas including fuel gas is circulated between the fuel gas generation member 1 and the fuel cell part 2 and the fuel gas not used in the fuel cell part 2 is reutilized by being resupplied to the fuel cell part 2 by circulation.

Because there is a possibility that the fuel gas might be temporarily insufficient due to power fluctuation during a period shorter than the unit time when the unit time is made long, the controller 7 may not set a smallest circulation volume above the estimated value of volume required, but may set the gas circulation volume to be a at or above a prescribed multiple, for example, at or above 1.5 times, of the estimated value of volume required, or, the controller 7 may set the gas circulation volume to be higher than a volume having added to the estimated value of volume required a surplus amount at or above the amount of power fluctuation (see graph 101 in Fig. 2) during a period shorter than the unit time.

In the example of 103 in Fig. 3, the number of levels of gas circulation volume is four levels up to V4 including V1 being the minimum value of 0, but the number of levels is not limited to this. The number of levels may be greater than this or may be less than this, and may be two values of on/off (for example, V4 and V1 as indicated by 103A in Fig. 3) at the simplest. Control of the gas circulation volume thereby becomes very convenient. Meanwhile, in the setting example 103 illustrated in Fig. 3, a smallest circulation volume higher than the estimated value of volume required is set in relation to a moment in time and the circulation volume is increased or decreased in the aim of preventing extreme operation of the circulator 6 and avoiding wasteful power consumption or noise.

The controller 7 suspends power generation when substantially all of the iron in the fuel gas generation member 1 is oxidized and surplus power is no longer generated. In the state of suspension of power generation, power is supplied from one or both of the electric power system 9 and the solar power generation system 8 to the load 10 by the control performed by the controller 10. At night, charging is performed using power supplied from the electric power system 9. Because the charging current at this time is determined by the controller 7, a larger short-period fluctuation can be prevented and the gas circulation volume can be circulated with a constant set value (for example, V4 in Fig. 3). The controller 7 suspends the charging operation when substantially all of the iron in the fuel gas generation member 1 is reduced and charging is completed. The controller 7 may be provided with a detector for detecting the oxidation-reduction state of the fuel gas generation member 1, for example, a device for detecting the oxidation-reduction state on the basis of change of weight of the fuel gas generation member 1, or a device for detecting the oxidation-reduction state on the basis of change of magnetic permeability of the fuel gas generation member 1. The detector for detecting the oxidation-reduction state of the fuel gas generation member 1 may be provided outside the fuel cell system according to one embodiment of the present invention so that the controller 7 receives a detection result from the detector.

A method of determining the estimated value of power demand per unit time related to a moment in time is described here. The simplest determination method is a method in which data of average power usage for the past one year is stored in a memory internal to the controller 7, and an average power usage on the same month and day of the preceding year is used as the estimated value of power demand per unit time related to the moment in time.

Also from the viewpoint of improving the precision of estimation of the estimated value of power demand, the estimated value of power demand may be determined on the basis of an immediately preceding estimated value of power demand and an immediately preceding power demand result for the fuel cell system according to one embodiment of the present invention. For example, when the estimated value of power demand from 9:00 to 10:00 is larger than the power demand result from 9:00 to 10:00 for the fuel cell system according to one embodiment of the present invention, in other words, when the actual power demand is lower than the estimated value, the next estimated value of power demand from 10:00 to 11:00 is set smaller than the estimated value of power demand from 9:00 to 10:00. Conversely, when the estimated value of power demand from 9:00 to 10:00 is smaller than the power demand result from 9:00 to 10:00 for the fuel cell system according to one embodiment of the present invention, in other words, when the actual power demand is higher than the estimated value, the next estimated value of power demand from 10:00 to 11:00 is set larger than the estimated value of power demand from 9:00 to 10:00. The gas circulation volume also is determined on the basis of the estimated value of volume required corresponding to the estimated value of power demand having been set smaller or set larger. When the difference between the immediately preceding estimated value of power demand and power demand result for the fuel cell system is large, the range of decrease or increase from the immediately preceding estimated value of power demand may be expanded in accordance with that difference. For example, as illustrated in Fig. 3, when the configuration is such that the gas circulation volume is controlled in levels to a plurality of discrete values, and when the difference between the immediately preceding estimated value of power demand and power demand result for the fuel cell system is large, the range may be increased or decreased not by one level but by two or more levels.

Also, from the viewpoint of improving the precision of estimation of the estimated value of power demand, the estimated value of power demand may be determined on the basis of a past average power usage and an immediately preceding power demand result for the fuel cell system according to one embodiment of the present invention. For example, an average power usage on the same month and day of the preceding year or an average power usage on the previous day may be used as a reference, and a value having corrected the average power usage on the same month and day of the preceding year or the average power usage on the previous day in accordance with an immediately preceding power demand result for the fuel cell system according to one embodiment of the present invention may be used as the estimated value of power demand per unit time related to the moment in time. For example, when the value of past average power usage from 9:00 to 10:00 is larger than the power demand result from 9:00 to 10:00 for the fuel cell system according to one embodiment of the present invention, in other words, when the actual power demand is lower than the past average power usage, the next estimated value of power demand from 10:00 to 11:00 is set smaller than the value of the past average power usage from 10:00 to 10:00. Conversely, when the value of the past average power usage from 9:00 to 10:00 is smaller than the power demand result from 9:00 to 10:00 for the fuel cell system according to one embodiment of the present invention, in other words, when the actual power demand is higher than the past average power usage, the next estimated value of power demand from 10:00 to 11:00 is set larger than the value of the past average power usage from 10:00 to 11:00. The gas circulation volume also is determined on the basis of the estimated value of volume required corresponding to the estimated value of power demand having been set smaller or set larger. When the difference between the immediately preceding power demand result for the fuel cell system and the corresponding value of past average power usage is large, the range of decrease or increase from the immediately preceding estimated value of power demand may be expanded in accordance with that difference. For example, as illustrated in Fig. 3, when the configuration is such that the gas circulation volume is controlled in levels to a plurality of discrete values and when the difference between the immediately preceding power demand result for the fuel cell system and the corresponding value of past average power usage is large, the range may be increased or decreased not by one level but by two or more levels.

The controller 7 also may limit a discharge current from the fuel cell part 2 so that the discharge current from the fuel cell part does not exceed a current equivalent to a set value of gas circulation volume set by the controller 7, in order to avoid a situation in which the fuel electrode 2B or the air electrode 2C is damaged by the fuel cell part 2 operating to pass a current exceeding the current value equivalent to the gas circulation volume set by the controller 7, or the like. An example of a method for limiting the discharge current from the fuel cell part 2 is a method in which the controller 7 breaks the electrical connection between the fuel cell part 2 and the load 10, or a method in which the controller 7 procures the excess amount of current from the electric power system 9.

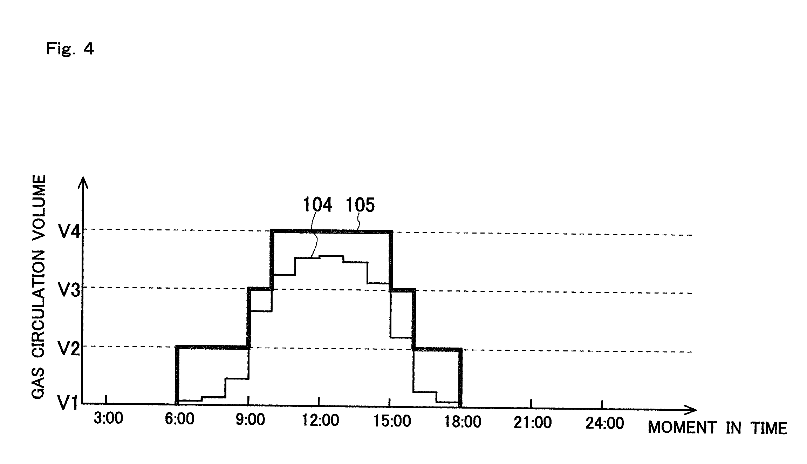

Fig. 4 is a graph illustrating an example of setting of gas circulation volume when charging using power generated by a solar power generation system 8. In the example illustrated in Fig. 4, charging is performed by the fuel cell system according to one embodiment of the present invention from 6:00 to 18:00. Although the power generated by the solar power generation system 8 varies greatly in accordance with the weather, the maximum power generated can be estimated in accordance with the place of installation, season, and time.

With regard to the gas circulation volume required during charging, a volume of water vapor per unit time required for electrolysis is determined from a charging current corresponding to a maximum power generated by the solar power generation system 8 per unit time related to a moment in time, and a volume of gas to be circulated per unit time (estimated value of volume required) is calculated from the volume of water vapor per unit time required for electrolysis and a ratio of water vapor in the gas circulating.

The controller 7 sets the gas circulation volume (graph 105 in Fig. 4) to be higher than the estimated value of volume required (graph 104 in Fig. 4) during charging (6:00 to 18:00) of the fuel cell system according to one embodiment of the present invention. When the fuel cell system according to one embodiment of the present invention is charged by surplus power of the solar power generation system 8 while using the power generated by the solar power generation system 8 on the load 10, the volume of water vapor per unit time required for electrolysis should be determined from a charging current corresponding to a volume having subtracted the average power usage per unit time related to a moment in time in the home from the maximum power generated by the solar power generation system 8 per unit time related to the moment in time.

### <Modified Examples>

In the above embodiment, the average power usage in the home (graph 100 in Fig. 2), that is, the estimated value of power demand is first set, the corresponding estimated value of gas volume required (graph 102 in Fig. 3) is sought, and a gas circulation volume higher than that (graph 103 in Fig. 3) is determined. However, it is also possible to previously set an estimated value of power usage at a value larger than an average power usage (estimated value of power demand) either by a predetermined margin (difference) or by a predetermined factor (percentage) and determine the gas circulation volume in correspondence thereto.

In the above embodiment, water is generated on the fuel electrode 2B side during power generation using a solid oxide electrolyte as the electrolytic membrane 2A of the fuel cell part 2. This configuration is advantageous for simplification or miniaturization of the device because the water is generated on the side where the fuel generation member 1 is provided. Meanwhile, a fuel cell also can be used, in which a solid polymer electrolyte that passes hydrogen ions is used as the electrolytic membrane 2A of the fuel cell part 2, as is the fuel cell disclosed in Japanese Patent Application Publication No. 2009-99491. However, in this case, a channel for propagating water to the fuel generation member 1 should be provided because water is generated on the side of the air electrode 2C, being the oxidizer electrode of the fuel cell part 2, during power generation. Also in the above embodiment, both power generation and electrolysis were performed by one fuel cell part 2, but the configuration may be such that a fuel cell (for example, a solid oxide fuel cell dedicated to power generation) and a water electrolysis device (for example, a solid oxide fuel cell dedicated to electrolysis of water) are connected in parallel on a gas channel on the fuel generation member 1.

In the above embodiment, a fuel generation member 1 in which the fuel is generated by a chemical reaction is used, but a hydrogen-occluding alloy can be used, for example, when the fuel is hydrogen.

In the above embodiment, the fuel of the fuel cell part 2 is hydrogen, but carbon monoxide, hydrocarbons, or other reducing gases other than hydrogen may be used as the fuel of the fuel cell part 2.

In the above embodiment, air is used as the oxidizer gas, but an oxidizer gas other than air may be used.

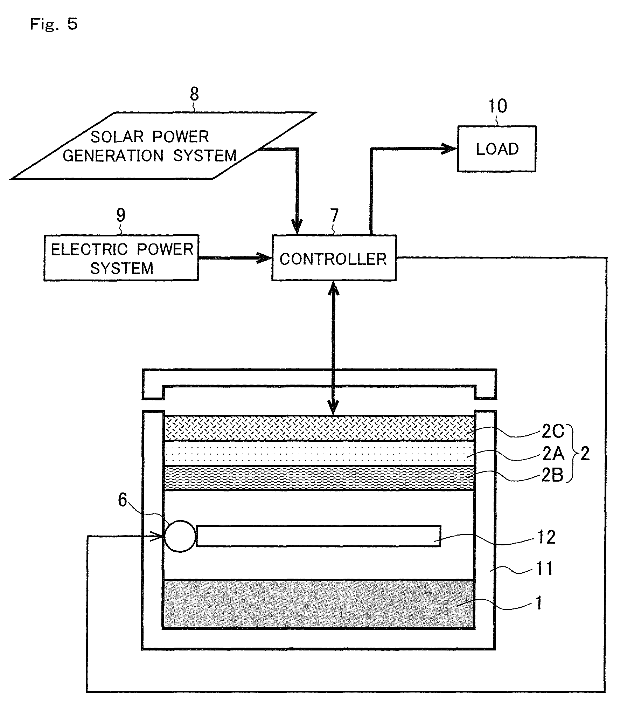

In the above embodiment, the fuel generation member 1 and the fuel cell part 2 are housed in separate containers, but these parts may be housed in the same container 11 as illustrated in Fig. 5. In Fig. 5, the same reference signs are assigned to the same parts as in Fig. 1, and detailed descriptions are omitted. In the fuel cell system according to another embodiment of the present invention illustrated in Fig. 5, a partitioning member 12 is provided between the fuel electrode 2B and the fuel generation member 1. The partitioning member 12 is connected to the inner walls of the container 11 on the front side of the page surface and on the depth side of the page surface in Fig. 5. Meanwhile, gaps are provided between the partitioning member 12 and the inner wall of the container 11 in the left-right direction of the page surface in Fig. 5. According to such a configuration, circulation of gas including fuel gas can be forcibly circulated between the fuel cell part 2 and the fuel generation member 1 by the circulator 6 in the fuel cell system according to the other embodiment of the present invention illustrated in Fig. 5, just as with the fuel cell system according to one embodiment of the present invention illustrated in Fig. 1.

The fuel cell system described above is a fuel cell system provided with a fuel generation part for generating a fuel gas, and a fuel cell part for generating power using the fuel gas, the fuel cell system forcibly circulating gas including the fuel gas between the fuel cell part and the fuel generation part. The fuel cell system is configured (first configuration) being further provided with a gas circulation volume setting part for setting a circulation volume of gas circulating between the fuel cell part and the fuel generation part so that the circulation volume of gas circulating between the fuel cell part and the fuel generation part is brought to a circulation volume determined against an estimated value of power demand per unit time related to a moment in time. The circulation volume can be a circulation volume per unit time related to the moment in time.

In the above first configuration, the configuration can be such that the circulation volume of gas set in the gas circulation volume setting part is set so as to be higher than a volume required for the fuel cell system to generate power at the estimated value of power demand per unit time related to the moment in time.

In the above first configuration, the configuration can be such that the circulation volume of gas set in the gas circulation volume setting part is set so as to be higher than the estimated value of volume required per unit time related to the moment in time, which is a volume required for the fuel cell system to generate power at the estimated value of power demand per unit time related to the moment in time.

In the fuel cell system of the above first configuration, the configuration (second configuration) may be such that the gas circulation volume setting part determines the estimated value of volume required on the basis of an immediately preceding power demand result.

In the fuel cell system of the above first or second configuration, the configuration (third configuration) may be such that the gas circulation volume setting part sets as set values a plurality of discrete values having a maximum value at or above a volume required for a maximum discharge current from the fuel cell part.

In the fuel cell system of any of the above first to third configurations, the configuration (fourth configuration) may be such that the gas circulation volume setting part sets the circulation volume of gas circulating between the fuel cell part and the fuel generation part so that the circulation volume of gas circulating between the fuel cell part and the fuel generation part is higher than a volume having added to the estimated value of volume required a surplus amount at or above an amount of power fluctuation during a period shorter than the unit time.

In the fuel cell system of any of the above first to fourth configurations, the configuration may be provided with a current limiting part for limiting a discharge current from the fuel cell part so that the discharge current from the fuel cell part does not exceed a current equivalent to a set value set by the gas circulation volume setting part.

According to each configuration as above, insufficiency of fuel gas can be prevented without requiring fine control of the supply volume of fuel gas, by setting the unit time to a comparatively long time. Also according to such configurations, waste of fuel gas can be prevented because fuel gas not used in the fuel cell part is reutilized being resupplied to the fuel cell part by circulation.

### List of Reference Signs

- 1: Fuel generation member
- 2: Fuel cell part
- 2A: Electrolytic membrane
- 2B: Fuel electrode
- 2C: Air electrode
- 3, 4, 11: Container
- 5: Gas flow channel
- 5A: Gas flow channel configuration member
- 6: Circulator
- 7: Controller
- 8: Solar power generation system
- 9: Electric power system
- 10: Load
- 100: Graph of average power usage
- 101: Graph of actual power usage
- 102, 104: Graph of estimated value of volume required
- 103, 103A, 105: Graph of gas circulation volume

## Claims

1. A fuel cell system, comprising:
a fuel generation part for generating a fuel gas; and
a fuel cell part for generating power using the fuel gas;
the fuel cell system forcibly circulating gas including the fuel gas between the fuel cell part and the fuel generation part;
wherein the fuel cell system comprises
a gas circulation volume setting part for setting a circulation volume of gas circulating between the fuel cell part and the fuel generation part so that the circulation volume of gas circulating between the fuel cell part and the fuel generation part is brought to a circulation volume per unit time related to a moment in time, which is determined against an estimated value of power demand per unit time related to the moment in time.

2. The fuel cell system according to claim 1, wherein the circulation volume of gas set in the gas circulation volume setting part is set so as to be higher than a volume required for the fuel cell system to generate power at the estimated value of power demand per unit time related to the moment in time.

3. The fuel cell system according to claim 2, wherein the circulation volume of gas set in the gas circulation volume setting part is set so as to be higher than the estimated value of volume required per unit time related to the moment in time, which is a volume required for the fuel cell system to generate power at the estimated value of power demand per unit time related to the moment in time.

4. The fuel cell system according to any of claims 1 to 3, wherein the gas circulation volume setting part determines the estimated value of volume required on the basis of an immediately preceding power demand result.

5. The fuel cell system according to any of claims 1 to 4, wherein the gas circulation volume setting part sets as set values a plurality of discrete values having a maximum value at or above a volume required for a maximum discharge current from the fuel cell part.

6. The fuel cell system according to any of claims 1 to 5, wherein the gas circulation volume setting part sets the circulation volume of gas circulating between the fuel cell part and the fuel generation part so that the circulation volume of gas circulating between the fuel cell part and the fuel generation part is higher than a volume obtained by adding to the estimated value of volume required a surplus amount at or above an amount of power fluctuation during a period shorter than the unit time.

7. The fuel cell system according to any of claims 1 to 6, further comprising:
a current limiting part for limiting a discharge current from the fuel cell part so that the discharge current from the fuel cell part does not exceed a current equivalent to a set value set by the gas circulation volume setting part.
